(19) Europäisches Patentamt / European Patent Office / Office européen des brevets

(11) **EP 4 431 369 A1**

(12) **EUROPEAN PATENT APPLICATION**

(43) Date of publication:
**18.09.2024 Bulletin 2024/38**

(51) International Patent Classification (IPC):
**B62D 15/02** *(2006.01)* **B62D 13/06** *(2006.01)*

(21) Application number: **24163428.6**

(52) Cooperative Patent Classification (CPC):
**B62D 15/0285;** B62D 13/06

(22) Date of filing: **14.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 US 202318183645**

(71) Applicant: **Robert Bosch GmbH 70442 Stuttgart (DE)**

(72) Inventor: **Mayer, Philipp Livonia, Michigan, 48150 (US)**

(54) **ANYWHERE PARKING TRAILER**

(57)    A trailer tow assist system for assisting in rearward maneuvering of a trailer attached to a vehicle. The trailer tow assist system determines a reverse direction path to a final position of the vehicle and the trailer, determines a trailer angle for the trailer relative to the vehicle, selects a target waypoint positioned along the reverse direction path, determines an offset between a current position and orientation of the trailer and a target position and orientation of the trailer associated with the target waypoint, determines a target trailer angle based on the offset between the current position and orientation of the trailer and the target position and orientation of the trailer, determines an offset between the trailer angle and the target trailer angle, determines a steering angle based on the offset, and controls steering of the vehicle based on the steering angle while the vehicle moves backwards.

FIG. 1

**Description**

FIELD

This disclosure relates to assisted steering control during maneuvering and parking of a trailer hitched to a vehicle, for example, a trailer hitched to a pickup truck.

BACKGROUND

Maneuvering a trailer backwards while the trailer is hitched to a vehicle is difficult, as the trailer must be actively stabilized and the steering is not intuitive during reverse movement. Some trailer tow assist system exist and these systems help drivers park and maneuver a trailer while moving backwards.

SUMMARY

Although trailer tow assist systems exist, existing systems have limited capabilities. For example, some trailer tow assist systems are only capable of helping maneuver a trailer around a predefined turn (e.g., a 90 degree turn) or park a trailer in a defined and/or marked space. Accordingly, a trailer tow assist system that assists drivers with parking a trailer and/or maneuvering a trailer backwards in any target location is desired. Systems and methods for assisted trailer parking are described herein.

One example provides a trailer tow assist system for assisting in rearward maneuvering of a trailer attached to a vehicle. The system includes a rear video camera for providing a rearward image of the trailer and surroundings, a steering wheel position controller for controlling steering of the vehicle, and an electronic tow assist unit including an electronic processor and a memory. The electronic tow assist unit is configured to determine a reverse direction path to a final position of the vehicle and the trailer, determine a trailer angle for the trailer relative to the vehicle based upon video data received from the rear video camera, select a target waypoint positioned along the reverse direction path, determine an offset between a current position and orientation of the trailer and a target position and orientation of the trailer associated with the target waypoint, determine a target trailer angle based on the offset between the current position and orientation of the trailer and the target position and orientation of the trailer, determine an offset between the trailer angle and the target trailer angle, determine a steering angle based on the offset between the trailer angle and the target trailer angle, and control, via the steering wheel position controller, steering of the vehicle based on the steering angle while the vehicle moves backwards.

Another example provides a method for assisting in rearward maneuvering of a trailer attached to a vehicle with a trailer tow assist system. The trailer tow assist system includes an electronic tow assist unit including an electronic processor and a memory, a rear video camera, and a steering wheel position controller. The method includes determining, via the electronic tow assist unit, a reverse direction path to a final position of the vehicle and the trailer, determining, via the electronic tow assist unit, a trailer angle (e.g., the current trailer angle) for the trailer relative to the vehicle based upon video data received from the rear video camera, selecting, via the electronic tow assist unit, a target waypoint positioned along the reverse direction path, determining, via the electronic tow assist unit, an offset between a current position and orientation of the trailer and a target position and orientation of the trailer associated with the target waypoint, determining, via the electronic tow assist unit, a target trailer angle based on the offset between the current position and orientation of the trailer and the target position and orientation of the trailer, determining, via the electronic tow assist unit, an offset between the (current) trailer angle and the target trailer angle, determining, via the electronic tow assist unit, a steering angle based on the offset between the trailer angle and the target trailer angle, and controlling, via the steering wheel position controller, steering of the vehicle based on the steering angle while the vehicle moves backwards.

Another example provides a non-transitory computer readable medium including program instructions executed by an electronic processor for assisting in rearward maneuvering of a trailer attached to a vehicle along a trailer trajectory by determining a reverse direction path to a final position of the vehicle and the trailer, determining a trailer angle for the trailer relative to the vehicle based upon video data received from a rear video camera, selecting a target waypoint positioned along the reverse direction path, determining an offset between a current position and orientation of the trailer and a target position and orientation of the trailer associated with the target waypoint, determining a target trailer angle based on the offset between the current position and orientation of the trailer and the target position and orientation of the trailer, determining an offset between the trailer angle and the target trailer angle, determining a steering angle based on the offset between the trailer angle and the target trailer angle, and controlling, by a steering wheel position controller, steering of the vehicle based on the steering angle while the vehicle moves backwards.

Other aspects, features, and embodiments will become apparent by consideration of the detailed description and accompanying drawings.

BRIEF DESCRIPTION OF THE DRAWINGS

FIG. 1 illustrates a top view of a vehicle and trailer on a roadway and a plurality of desired parking positions of the vehicle and trailer, according to one example.

FIG. 2 illustrates a block diagram of a trailer tow assist system for assisting in rearward maneuvering of a trailer, according to one example.

FIG. 3 is a block diagram of a method for assisting in the rearward maneuvering of a trailer coupled to a vehicle, according to one example.

FIG. 4 illustrates an exemplary image for display depicting a trailer trajectory and a trailer with surroundings, according to one example.

FIG. 5 illustrates a top view of a vehicle and trailer offset from a plurality of waypoints 125, according to one example.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of various aspects and examples.
The apparatus and method components have been represented where appropriate by conventional symbols in the drawings, showing only those specific details that are pertinent to understanding the examples, instances, and aspects illustrated so as not to obscure the disclosure with details that will be readily apparent to those of ordinary skill in the art having the benefit of the description herein.

DETAILED DESCRIPTION

One or more aspects are described and illustrated in the following description and accompanying drawings. These aspects are not limited to the specific details provided herein and may be modified in various ways. Furthermore, other aspects may exist that are not described herein. For example, a device or structure that is "configured" in a certain way is configured in at least that way but may also be configured in ways that are not listed. Furthermore, some aspects described herein may include one or more electronic processors configured to perform the described functionality by executing instructions stored in non-transitory, computer-readable medium. Similarly, aspects described herein may be implemented as non-transitory, computer-readable medium storing instructions executable by one or more electronic processors to perform the described functionality. As used in the present application, "non-transitory computer-readable medium" comprises all computer-readable media but does not include a transitory, propagating signal. Accordingly, non-transitory computer-readable medium may include, for example, a hard disk, a CD-ROM, an optical storage device, a magnetic storage device, ROM (Read Only Memory), RAM (Random Access Memory), register memory, a processor cache, other memory and storage devices, or combinations thereof.
In addition, the phraseology and terminology used herein is for the purpose of description and should not be regarded as limiting. For example, the use of "including," "containing," "comprising," "having," and variations thereof herein is meant to encompass the items listed thereafter and equivalents thereof as well as additional items. The terms "connected" and "coupled" are used broadly and encompass both direct and indirect connecting and coupling. Further, "connected" and "coupled" are not restricted to physical or mechanical connections or couplings and can include electrical connections or couplings, whether direct or indirect. In addition, electronic communications and notifications may be performed using wired connections, wireless connections, or a combination thereof and may be transmitted directly or through one or more intermediary devices over various types of networks, communication channels, and connections. Moreover, relational terms, for example, first and second, top and bottom, and the like may be used herein solely to distinguish one entity or action from another entity or action without necessarily requiring or implying any actual such relationship or order between such entities or actions.

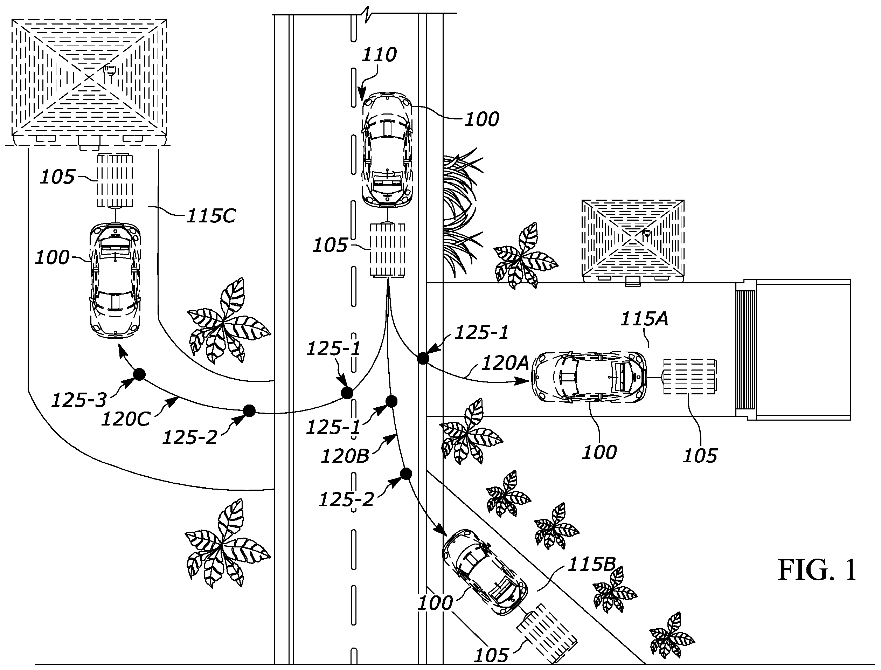

FIG. 1 shows a vehicle 100 that is connected to a trailer 105 and disposed on a roadway. In some instances, the trailer 105 is a common non-steering one-axle trailer. In other instances, the trailer 105 is a common non-steering multiple-axle trailer. In some instances, the trailer 105 has a length of about 1 to about 20 meters. From a starting position 110 in the roadway, the vehicle 100 and the trailer 105 move to a target parking, or final position 115A-115C along a respective reverse direction path 120A-120C with assistance from a trailer tow assist system and a driver operating an accelerator pedal and a brake pedal.
In some instances, a reverse direction path 120A-120C to a respective final position 115A-115C of the vehicle 100 and the trailer 105 is defined by one or more intermediate waypoints 125 positioned between the starting position 110 and the final position 115A-115C. A respective waypoint 125 includes x-y coordinates associated with the position of the vehicle 100 and the trailer 105 and a target orientation of the vehicle 100 and the trailer 105 at the waypoint 125. In the illustrated example, the first reverse direction path 120A to the first final position 115A includes one waypoint 125-1 positioned along the first reverse direction path 120A. Furthermore, the second reverse direction path 120B to the second final position 115B includes two waypoints 125-1, 125-2 positioned along the second reverse direction path 120B and the third reverse direction path 120C to the third final position 115C includes three waypoints 125-1, 125-2, and 125-3 positioned along the third reverse direction path 120C. It should be understood that the waypoints 125 illustrated in FIG. 1 are provided as non-limiting examples and that a particular reverse direction path 120 may include a different number (e.g., tens, hundreds, etc.) of waypoints.

As a first example, while the trailer tow assist system controls vehicle steering to move the vehicle 100 and the trailer 105 along the first reverse direction path 120A to the first final position 115A, the trailer tow assist system controls movement of the vehicle 100 and the trailer 105 from the starting position 110 to the waypoint 125-1 and from the waypoint 125-1 to the first final position 115A. As another example, while the trailer tow assist system controls vehicle steering to move the vehicle 100 and the trailer 105 along the second reverse direction path 120B to the second final position 115B, the trailer tow assist system controls movement of the vehicle 100 and the trailer 105 from the starting position 110 to the waypoint 125-1, from the waypoint 125-1 to the waypoint 125-2, and from the waypoint 125-2 to the second final position 115B. As another example, while the trailer tow assist system controls vehicle steering to move the vehicle 100 and the trailer 105 along the third reverse path 120C to the third final position 115C, the trailer tow assist system controls movement of the vehicle 100 and the trailer 105 from the starting position 110 to the waypoint 125-1, from the waypoint 125-1 to the waypoint 125-2, from the waypoint 125-2 to the waypoint 125-3, and from the waypoint 125-3 to the third final position 115C.

It should be understood that the final positions 1115A-115C, the reverse direction paths 120A-120C, and the respective waypoints 125 along the reverse direction paths 120A-120C shown in FIG. 1 are provided as examples and are not intended to limit implementation of the trailer tow assist system described herein. As will be described in more detail below, the trailer tow assist system is operable to assist with maneuvering the vehicle 100 and the trailer 105 towards and/or parking the vehicle 100 and the trailer 105 at any target position and/or orientation. Moreover, the trailer tow assist system may assist with determining and controlling steering of the vehicle 100 and the trailer 105 along a reverse direction path including any number of waypoints to any target position and/or orientation. In some instances, the trailer tow assist system assists with determining a sharpest path from the starting position 110 of the vehicle 100 and the trailer 105 to a particular waypoint 125 and/or a final position 115. In some instances, the waypoints 125 along a particular reverse direction path 120 are determined by the trailer tow assist system. In other instances, the waypoints 125 along a particular reverse direction path 120 to a target final position 115 are provided by a user input.

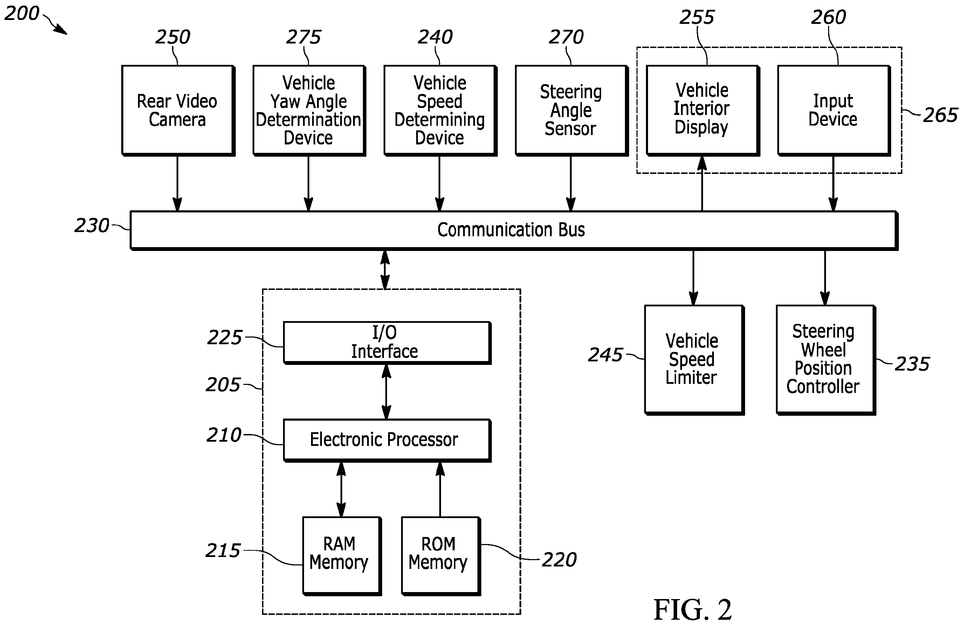

FIG. 2 is a block diagram of a trailer tow assist system 200 included in the vehicle 100 according to one example. The trailer tow assist system 200 is used for controlling vehicle steering to maneuver the trailer 105 connected to the vehicle 100. In the illustrated example, the trailer tow assist system 200 includes an electronic tow assist unit 205. In the example shown, the electronic tow assist unit 205 includes an electronic processor 210 and a memory. The memory includes one or more memory modules, such as a random access memory ("RAM") 215 and/or read only memory ("ROM"), for example, an electronically erasable programmable read-only memory ("EEPROM") 220. The electronic tow assist unit 205 also include input/output interface 225, which, for example, transmits and receives information between the electronic processor 210 and other devices, for example, over a communication bus 230. The electronic processor 210 processes the information by executing one or more applications or modules. The applications or modules can be stored as instructions or commands in the memory 215, 220. The electronic processor 210 also stores information in the memory 215, 220 generated by applications.

In some instances, the communication bus 230 is a FlexRay automotive communication bus, controller area network (CAN) bus, or other type of communication link between a plurality of control units, sensors, and other devices. The communication bus 230 connects the electronic tow assist unit 205 to an electronic steering wheel position controller 235, such as a power steering control motor, that is controlled by the electronic tow assist unit 205 in a trailer tow assist operating mode.

As shown, the trailer tow assist system 200 also includes a vehicle speed determination device 240 and a vehicle speed limiter 245. The vehicle speed determination device 240 determines a vehicle speed and provides the vehicle speed to other units via the communication bus 230. In some instances, the vehicle speed determination device 240 is a vehicle speed sensor. In other instances, the vehicle speed determination device 240 and/or other components of the trailer tow assist system 200 calculate the vehicle speed. The vehicle speed limiter 245 limits speed of a vehicle in an automatic steering maneuver mode. In some instances, the vehicle speed limiter 245 is an electronic drive control system of a vehicle that receives an input of a vehicle speed limit signal from the electronic processor 210 from the tow assist system that limits the reverse direction speed for a vehicle to prevent a driver from exceeding the vehicle speed limit for an automatic steering maneuver mode.

The trailer tow assist system 200 additionally includes a rear video camera 250 for providing images from the rear of the vehicle 100. The images can include the trailer 105 that is hitched to the vehicle 100. In some instances, the images are a panoramic view. In some instances, multiple video cameras are provided. The rear video camera 250 provides video data over the communication bus 230 to the electronic processor 210.

As further shown in FIG. 2, the trailer tow assist system 200 includes a vehicle interior display 255 and an input device 260. In some instances, the vehicle interior display 255 is a display panel for displaying images and instructions to a driver. In some instances, the input device 260 is a keyboard, joystick, or keypad or similar device that is manually manipulated. In other instances, the input device is a microphone, and the electronic processor may include voice analysis software to process voice commands. In some instances, multiple input devices are used. In some instances, the arrangement is a touchscreen 265 that integrates the vehicle interior display 255 and input device 260 into a single element that displays information and images and receives touch inputs. The touchscreen 265 may be disposed at a console in the vehicle interior. In one example, the driver inputs a reverse direction path and a final position and/or orientation of the vehicle 100 and the trailer 105 using the input device 260 and/or the touchscreen 265. In another example, using the input device 260 and/or than the touchscreen 265, the driver inputs one or more target waypoints along a reverse direction path to the final position and/or orientation of the vehicle 100.

A steering angle sensor 270 is included in the trailer tow assist system 200 for providing a steering wheel position of the vehicle 100 to the electronic processor 210. For example, the steering angle sensor 270 is connected to the communication bus 230 to provide a steering wheel position to the electronic processor 210 via the input/output interface 225. In some instances, the steering angle sensor 270 is disposed on a steering column of the steering device. In some instances, the steering angle sensor 270 is configured to sense rotation of a pinion gear secured to a steering shaft of the vehicle. In other instances, the steering angle sensor 270 determines steering angle based on motor rotation of the power steering control motor and a ratio with respect to the rack and pinion gear.

In some instances, the trailer tow assist system 200 includes a vehicle yaw angle determination device 275. For example, the vehicle yaw angle determination device 275 is provided on the vehicle 100 as a gyro sensor that communicates yaw rate to components of the trailer tow assist system 200 via the communication bus 230. In such an example, the yaw rate is integrated to determine a yaw. In some instances, the vehicle yaw angle is calculated based on vehicle speed and vehicle steering angle. Thus, in such instances, the vehicle yaw angle determination device 275 is provided by the electronic processor 210. The vehicle yaw angle is determined with respect to a starting position for a vehicle maneuver.

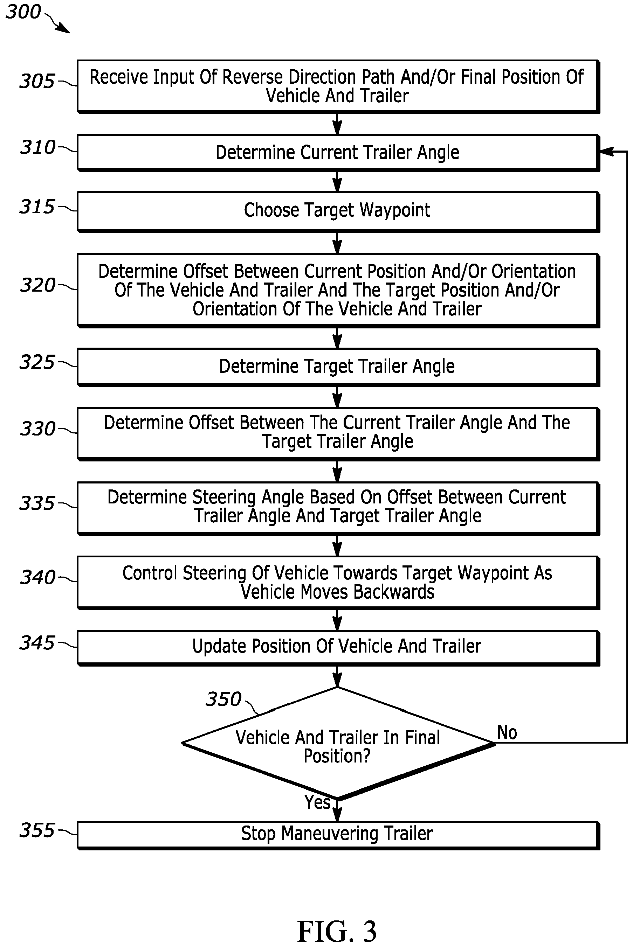

FIG. 3 illustrates an example method 300 for assisting in the rearward maneuvering of the trailer 105 coupled to the vehicle 100. The method 300 is described as being executed by one or more components of the trailer tow assist system 200, such as the electronic tow assist unit 205. Although the trailer tow assist system 200 is shown as including a single electronic tow assist unit 205, it should be understood that multiple control units and/or electronic processors 210 may perform the functions shown in FIG. 3.

At step 305, the electronic tow assist unit 205 receives an input of a reverse direction path 120 to a final position 115 of the vehicle 100 and the trailer 105. In some instances, the electronic tow assist unit 205 receives a user input of the reverse direction path 120 and/or the final position 115 of the vehicle 100 and the trailer 105 from the input device 260 and/or the touchscreen 265. For example, in such instances, video data associated with the environment surrounding the vehicle 100 received from the rear video camera 250 is presented to a user via the vehicle interior display 255 and/or touchscreen 265, and the user provides the reverse direction path 120 and/or the final position 115 of the vehicle 100 and the trailer 105 to the input device 260 and/or the touchscreen 265. Providing the reverse direction path 120 and/or the final position 115 of the vehicle 100 and the trailer 105 to the input device 260 and/or the touchscreen 265 may include, for example, tracing a path to the final position of the vehicle 100 and the trailer 105 over the video data received from the rear video camera 250, entering x-y coordinates and/or orientation information associated with the reverse direction path 120 and/or the final position 115 of the vehicle 100 and the trailer 105, and the like.

As described above with respect to FIG. 1, the reverse direction path 120 of the vehicle 100 and the trailer 105 includes a sequence of one or more waypoints 125 along the reverse direction path 120 from the starting position 110 of the vehicle 100 and the trailer 105 to the final position of the vehicle 100 and 105. Thus, at step 305, the electronic tow assist unit 205 also receives the sequence of one or more waypoints 125 along the reverse direction path 120 when receiving an input of a reverse direction path 120 to a final position 115 of the vehicle 100 and the trailer 105.

In some instances, providing the reverse direction path 120 and/or the final position 115 of the vehicle 100 and the trailer 105 to the input device 260 and/or the touchscreen 265, includes providing a sequence of waypoints 125 along the reverse direction path 120 to the input device 260 and/or the touchscreen 265. Each waypoint 125 includes a respective set of x-y coordinates and orientation information associated with the vehicle 100 and the trailer 105. The orientation information may include, for example, information associated with an angle between the vehicle 100 and the trailer 105 and one or more physical properties or parameters of the vehicle 100 and the trailer 105. In some instances, orientation information includes vehicle/trailer orientation in reference to vehicle/trailer orientation of another waypoint 125, or vehicle/trailer orientation in reference to trailer/vehicle orientation of the same waypoint 125. In some instances, the user provides the waypoints 125 as in input. In other instances, the electronic tow assist unit 205 determines the sequence of waypoints based on one or more of the video data received from the rear video camera 250, the reverse direction path 120 provided as an input, and/or the final position 115 of the vehicle 100 and the trailer 105 provided as an input. In some instances, the final position 115 of the vehicle 100 and the trailer 105 is simply the last waypoint 125 in the sequence of waypoints 125.

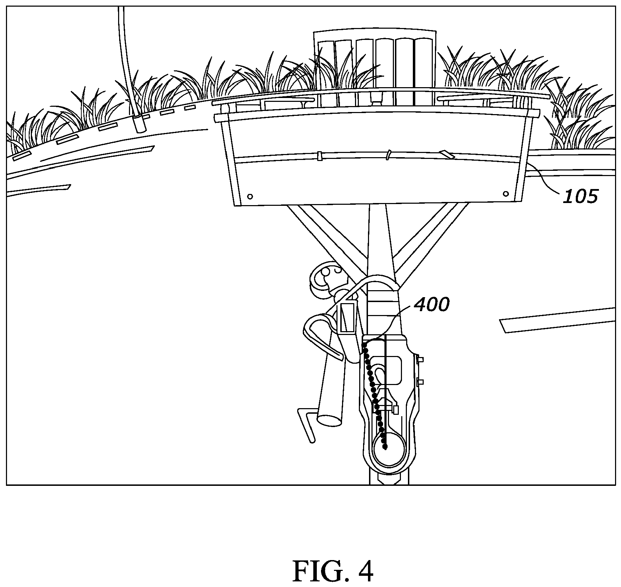

At step 310, the electronic tow assist unit 205 determines the current trailer angle of the trailer 105. The trailer angle is defined by the relative orientation of the trailer 105 with respect to the vehicle 100. When the vehicle 100 and trailer 105 are aligned along the same axis, for example when the vehicle 100 is driven forward in a straight direction, the trailer angle is zero degrees. In some instances, the electronic tow assist unit 205 determines the trailer angle based on information received from one or more components included in the trailer tow assist system 200. For example, the electronic tow assist unit 205 determines the trailer angle based on video data received from the rear video camera 250. In some instances, a different component included in the trailer tow assist system 200 determines the trailer angle and provides the trailer angle to the electronic tow assist unit 205. FIG. 4 illustrates an example image captured by the rear video camera 250 in which a trailer angle 400 between the trailer 105 and the vehicle 100 is shown.

At step 315, the electronic tow assist unit 205 chooses a target waypoint 125 along the reverse direction path 120 to maneuver the trailer 105 to. For example, the electronic tow assist unit 205 may choose the next waypoint 125 in the sequence that is positioned between the current position of the vehicle 100 and the trailer 105 and the final position 115 of the vehicle 100 and the trailer 105. In other instances, the electronic tow assist unit 205 chooses a waypoint 125 with a minimum distance from the current position to help ensure a smooth maneuver path and to limit the required steering angle. With respect to the illustrated example of FIG. 1, if the vehicle 100 and the trailer 105 are assumed to be in the starting position 110 and the third final position 115C and/or the third reverse direction path 120C have been received at step 305, the electronic tow assist unit 205 chooses the waypoint 125-1 positioned along the third reverse direction path 120C as the target waypoint 125.

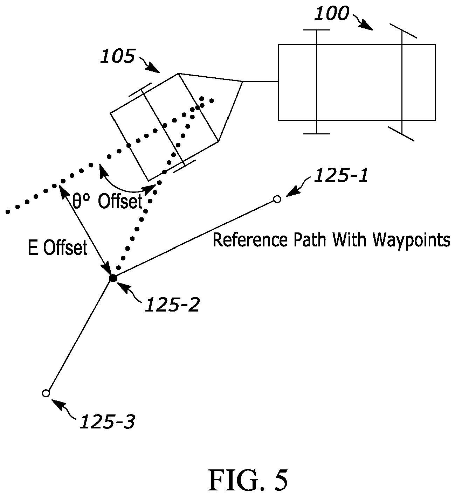

As described above, each waypoint 125 along the reverse direction path 120 is associated with a particular position and/or orientation of the vehicle 100 and the trailer 105. For example, x-y coordinates of the vehicle 100 and the trailer 105 and/or a particular orientation of the trailer 105 relative to the vehicle 100 is associated with each waypoint 125 along the reverse direction path 120. At step 320, the electronic tow assist unit 205 determines an offset between the current position and/or orientation of the vehicle 100 and the trailer 105 and the target position and/or orientation of the vehicle 100 and the trailer 105 at the target waypoint 125. The offset includes, for example, differences between the x-y coordinates of the current position of the vehicle 100 and the trailer 105 and the x-y coordinates of the position of the vehicle 100 and the trailer 105 at the target waypoint 125. The offset may also include differences between the current orientation of the vehicle 100 and the trailer 105 and the orientation of the vehicle 100 and the trailer 105 at the target waypoint 125. FIG. 5 shows the vehicle 100 connected to the trailer 105 and the offset between the current position and/or orientation of the vehicle 100 and the trailer 105 and the target position and/or orientation of the vehicle 100 and the trailer 105 at a plurality of waypoints 125. For example, the electronic tow assist unit 205 may determine the offset between the current position and/or orientation of the vehicle 100 and the trailer 105 and the target position and/or orientation of the vehicle 100 and the trailer 105 at the target waypoint 125 via Equation 1 and Equation 2.

$$e_{offset} = e_{target} - e_{current}$$

Equation 1

$$\theta_{offset} = \theta_{target} - \theta_{current}$$

Equation 2

Where $e_{offset}$ is the position offset of the trailer 105, $e_{target}$ is the target position of the trailer 105, $e_{current}$ is the current position of the trailer 105, $\theta_{offset}$ is the orientation offset of the trailer 105, $\theta_{target}$ is the target position of the trailer 105, and $\theta_{current}$ is the current position of the trailer 105.

At step 325, the electronic tow assist unit 205 determines, based on the offset determined at step 320, a target trailer angle, or curvature, needed to maneuver the trailer 105 to the target waypoint. In some instances, the electronic tow assist unit 205 determines the target trailer angle by multiplying the position offset and the orientation offset by a constant or by a variable based on a measurement or parameter of the vehicle 100 or the trailer 105. For example, the electronic tow assist unit 205 may determine the target trailer angle via Equation 3.

$$\gamma_{target} = K_1 * e_{offset} + K_2 * \theta_{offset}$$

Equation 3

Where $\gamma_{target}$ is the target trailer angle, $K_1$ is a first constant, $e_{offset}$ is the position offset of the trailer 105, $K_2$ is a second constant, and $\theta_{offset}$ is the orientation offset of the trailer 105.

At step 330, the electronic tow assist unit 205 determines an offset, or difference, between the current trailer angle that was determined at step 310 and the target trailer angle that was determined at step 325. At step 335, the electronic tow assist unit 205 determines, based on the offset between the current trailer angle and the target trailer angle, a steering angle (e.g., a target steering angle) that is required to maneuver the trailer 105 to the target trailer angle. In one instance, the electronic tow assist unit 205 determines the offset between the current trailer angle and the target trailer angle via Equation 4 and the target steering angle via Equation 5.

$$\gamma_{offset} = \gamma_{target} - \gamma_{current}$$

Equation 4

$$\beta_{target} = K_3 * \gamma_{offset} + K_4$$

Equation 5

Where $\gamma_{offset}$ is the offset between the current trailer angle and the target trailer angle, $\gamma_{target}$ is the target trailer angle, $\gamma_{current}$ is the current trailer angle, $\beta_{target}$ is the target steering angle, $K_3$ is a third constant, and $K_4$ is a fourth constant.

At step 340, the vehicle 100 moves in reverse and the electronic tow assist unit 205 controls steering, via the steering wheel position controller 235, of the vehicle 100 based on the steering angle determined at step 335. For example, the electronic tow assist unit 205 provides, via the communication bus 230, the steering angle to the steering wheel position controller 235 which controls steering of the vehicle as a user presses the accelerator pedal to cause the vehicle 100 and trailer 105 to move in reverse. After maneuvering the vehicle 100 and the trailer backwards towards the target waypoint 125, the electronic tow assist unit 205 determines an updated position and/or orientation of the vehicle 100 and the trailer 105 at step 345.

At step 350, the electronic tow assist unit 205 determines whether the vehicle 100 and the trailer 105 are in the final position 115. When the vehicle 100 and the trailer 105 are oriented in the final position 115, the backwards maneuver has been completed and the electronic tow assist unit 205 stops maneuvering the trailer 105 (step 355). However, when the vehicle 100 and the trailer 105 have not reached the final position, the electronic tow assist unit 205 repeats the method 300 starting at step 310.

While the electronic tow assist unit 205 is illustrated as a separate unit in FIG. 3, in some instances, the electronic tow assist unit 205 is provided as an algorithm executed by a vehicle assist unit that performs other functions, such as collision avoidance warnings and lane change warnings.

Although the system depicts components as logically separate, such depiction is merely for illustrative purposes. In some embodiments, the illustrated components may be combined or divided into separate software, firmware and/or hardware. Regardless of how they are combined or divided, these components may be executed on the same computing device or may be distributed among different computing devices or electronic processors connected by one or more networks or other suitable communication means.

Various features, advantages, and embodiments are set forth in the following claims.

**Claims**

1. A trailer tow assist system for assisting in rearward maneuvering of a trailer attached to a vehicle, the trailer tow assist system comprising:

    a rear video camera for providing a rearward image of the trailer and surroundings;
    a steering wheel position controller for controlling steering of the vehicle; and
    an electronic tow assist unit including an electronic processor and a memory, the electronic tow assist unit configured to:

determine a reverse direction path to a final position of the vehicle and the trailer;
determine a trailer angle for the trailer relative to the vehicle based upon video data received from the rear video camera;
select a target waypoint positioned along the reverse direction path;
determine an offset between a current position and orientation of the trailer and a target position and orientation of the trailer associated with the target waypoint;
determine a target trailer angle based on the offset between the current position and orientation of the trailer and the target position and orientation of the trailer;
determine an offset between the trailer angle and the target trailer angle;
determine a steering angle based on the offset between the trailer angle and the target trailer angle; and
control, via the steering wheel position controller, steering of the vehicle based on the steering angle while the vehicle moves backwards.

2. The trailer tow assist system of claim 1, wherein the electronic tow assist unit is further configured to:

determine an updated position of the vehicle and the trailer;
stop maneuvering the trailer when the updated position of the vehicle and the trailer is the final position of the vehicle and the trailer; and
responsive to determining that the updated position of the vehicle and the trailer is not the final position of the vehicle and the trailer, determine an updated trailer angle and select a new target waypoint positioned along the reverse direction path.

3. The trailer tow assist system of claim 1, further comprising an input device configured to receive an input of the reverse direction path from a user.

4. The trailer tow assist system of claim 3, wherein the input device is further configured to receive an input of the final position of the vehicle and the trailer from a user.

5. The trailer tow assist system of claim 4, wherein the reverse direction path includes a sequence of waypoints positioned between the current position of the vehicle and the trailer and the final position of the vehicle and the trailer.

6. The trailer tow assist system of claim 5, wherein the electronic tow assist unit is further configured to select the target waypoint from the sequence of waypoints included in the reverse direction path.

7. The trailer tow assist system of claim 1, wherein the reverse direction path includes a sequence of waypoints positioned between the current position of the vehicle and the trailer and the final position of the vehicle and the trailer; and
wherein the electronic tow assist unit is further configured to select one waypoint from the sequence of waypoints as the target waypoint.

8. A method for assisting in rearward maneuvering of a trailer attached to a vehicle with a trailer tow assist system, the trailer tow assist system including an electronic tow assist unit including an electronic processor and a memory, a rear video camera, and a steering wheel position controller, the method comprising:

determining, via the electronic tow assist unit, a reverse direction path to a final position of the vehicle and the trailer;
determining, via the electronic tow assist unit, a trailer angle for the trailer relative to the vehicle based upon video data received from the rear video camera;
selecting, via the electronic tow assist unit, a target waypoint positioned along the reverse direction path;
determining, via the electronic tow assist unit, an offset between a current position and orientation of the trailer and a target position and orientation of the trailer associated with the target waypoint;
determining, via the electronic tow assist unit, a target trailer angle based on the offset between the current position and orientation of the trailer and the target position and orientation of the trailer;
determining, via the electronic tow assist unit, an offset between the trailer angle and the target trailer angle;
determining, via the electronic tow assist unit, a steering angle based on the offset between the trailer angle and the target trailer angle; and
controlling, via the steering wheel position controller, steering of the vehicle based on the steering angle while the vehicle moves backwards.

9. The method according to claim 8, further comprising:

   determining, via the electronic tow assist unit, an updated position of the vehicle and the trailer;
   stopping, via the electronic tow assist unit, maneuvering the trailer when the updated position of the vehicle and the trailer is the final position of the vehicle and the trailer; and
   responsive to determining that the updated position of the vehicle and the trailer is not the final position of the vehicle and the trailer, determining, via the electronic tow assist unit, an updated trailer angle and select a new target waypoint positioned along the reverse direction path.

10. The method according to claim 8, further comprising receiving, via an input device, an input of the reverse direction path from a user.

11. The method according to claim 10, further comprising receiving, via the input device, an input of the final position of the vehicle and the trailer from a user.

12. The method according to claim 11, wherein the reverse direction path includes a sequence of waypoints positioned between the current position of the vehicle and the trailer and the final position of the vehicle and the trailer.

13. The method according to claim 12, further comprising selecting, via the electronic tow assist unit, the target waypoint from the sequence of waypoints included in the reverse direction path.

14. The method according to claim 8, further comprising selecting, via the electronic tow assist unit, one waypoint from a sequence of waypoints positioned between a current position of the vehicle and the trailer and the final position of the vehicle and the trailer as the target waypoint.

15. A non-transitory computer readable medium including program instructions executed via an electronic processor for assisting in rearward maneuvering of a trailer attached to a vehicle along a trailer trajectory by:

   determining a reverse direction path to a final position of the vehicle and the trailer;
   determining a trailer angle for the trailer relative to the vehicle based upon video data received from a rear video camera;
   selecting a target waypoint positioned along the reverse direction path;
   determining an offset between a current position and orientation of the trailer and a target position and orientation of the trailer associated with the target waypoint;
   determining a target trailer angle based on the offset between the current position and orientation of the trailer and the target position and orientation of the trailer;
   determining an offset between the trailer angle and the target trailer angle;
   determining a steering angle based on the offset between the trailer angle and the target trailer angle; and
   controlling, via a steering wheel position controller, steering of the vehicle based on the steering angle while the vehicle moves backwards.

FIG. 1

FIG. 2

*300*

*305* — Receive Input Of Reverse Direction Path And/Or Final Position Of Vehicle And Trailer

*310* — Determine Current Trailer Angle

*315* — Choose Target Waypoint

*320* — Determine Offset Between Current Position And/Or Orientation Of The Vehicle And Trailer And The Target Position And/Or Orientation Of The Vehicle And Trailer

*325* — Determine Target Trailer Angle

*330* — Determine Offset Between The Current Trailer Angle And The Target Trailer Angle

*335* — Determine Steering Angle Based On Offset Between Current Trailer Angle And Target Trailer Angle

*340* — Control Steering Of Vehicle Towards Target Waypoint As Vehicle Moves Backwards

*345* — Update Position Of Vehicle And Trailer

*350* — Vehicle And Trailer In Final Position?

No

Yes

*355* — Stop Maneuvering Trailer

FIG. 3

**FIG. 4**

*100*

*105*

*125-1*

θ° Offset

E Offset

Reference Path With Waypoints

*125-2*

*125-3*

FIG. 5

Europäisches
Patentamt

European
Patent Office

Office européen
des brevets

# EUROPEAN SEARCH REPORT

Application Number

EP 24 16 3428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/129939 A1 (SINGH HARPREET [GB] ET AL) 12 May 2016 (2016-05-12) * paragraphs [0002], [0005], [0012], [0013], [0056], [0058], [0061] - [0063], [0065] - [0067], [0069], [0070], [0072], [0079] - [0086], [0102] - [0109]; claims; figures * | 1-15 | INV. B62D15/02 B62D13/06 |
| X | US 2015/158527 A1 (HAFNER MICHAEL [US] ET AL) 11 June 2015 (2015-06-11) * paragraphs [0046], [0095], [0096], [0098], [0122], [0123]; claims; figures * | 1,8,15 | |

TECHNICAL FIELDS
SEARCHED (IPC)

B62D

The present search report has been drawn up for all claims

| Place of search | Date of completion of the search | Examiner |
|---|---|---|
| The Hague | 12 July 2024 | Ducher, Alban |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 16 3428

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2024

| Patent document cited in search report | | Publication date | Patent family member(s) | | Publication date |
|---|---|---|---|---|---|
| US 2016129939 | A1 | 12-05-2016 | EP 3016835 | A2 | 11-05-2016 |
| | | | GB 2515800 | A | 07-01-2015 |
| | | | US 2016129939 | A1 | 12-05-2016 |
| | | | WO 2015001054 | A2 | 08-01-2015 |
| US 2015158527 | A1 | 11-06-2015 | NONE | | |

EPO FORM P0459